# EUROPEAN PATENT APPLICATION

(11) **EP 1 709 867 A1**
(43) Date of publication of application: **11.10.2006**
(21) Application number: 06075601.2
(22) Date of filing: 15.03.2006
(51) Int. Cl.: A01K 1/12, A01K 1/00, A01J 5/017

(54) **An installation for and a method of milking animals such as cows**

(30) Priority: 06.04.2005 NL 1028703
(71) Applicant: Lely Enterprises AG, 6300 ZUG (CH)
(72) Inventor: van den Berg, Karel, 2971 BR Bleskensgraaf (NL)
(74) Representative: Corten, Maurice Jean F.M.

(57) **Abstract**

An installation for and a method of milking animals, such as cows, comprising a first (10) and at least one further milking robot (20,30). Each milking robot comprises a robot arm for automatically connecting a teat cup to a teat. A selection unit admits an animal to the first or to a further milking robot. The selection unit is provided with an animal identification system (2) for identifying an animal. A control unit (1) controls the selection unit with the aid of data from the animal identification system. The control unit comprises a memory (42) for at least a first admission criterion. A determining device (43) determines whether an animal identified by the animal ideritification system satisfies the first admission criterion and supplies a positive admission signal when the animal satisfies the admission criterion and supplies a negative admission signal when the animal does not satisfy the admission criterion. Only by means of the positive admission signal the selection unit only admits the animal to the first milking robot, and only by means of the negative admission signal it admits the animal to a further milking robot.

## Description

The invention relates to an installation for milking animals, such as cows, according to the preamble of claim 1.

Such an installation is known from EP-A-0566201. This known installation comprises two milking robots. In normal circumstances only one milking robot is used. However, if at a certain moment it should appear that too many animals wish to be milked, then the second milking robot is also put into operation in order to reduce in this manner the waiting time for the animals. A waiting animal then gets access to the first milking robot that comes free.

It is an object of the invention to provide an alternative installation for milking animals.

For this purpose, according to the invention, an installation of the type mentioned in the preamble comprises the features of the characterizing part of claim 1. This means that the first milking robot only milks animals that satisfy the first admission criterion, so that this milking robot can be optimally adapted to the milking of those animals. This also means that all animals can be milked more efficiently. Moreover, it is possible to improve the quality of milk yielded by one milking robot.

In a preferred embodiment of an installation according to the invention, the memory contains animal identities as a first admission criterion. This means that a farmer is able, for example, to input beforehand into the control unit that a specific animal, designated by an animal identity, for example a number, has to be milked in a specific milking robot.

In a preferred embodiment of an installation according to the invention, the memory contains as a first admission criterion a criterion belonging to the group consisting of animal species, lactation stage, teat size and/or teat shape, medicine administration, measurements of the animal, pregnancy or non-pregnancy of the animal, and the time elapsed since the last time the animal was admitted. In this manner, for example, animals belonging to a particular animal species, for example Holstein cows or Jersey cows, can only be milked in the milking robot intended for that species.

In a preferred embodiment of an installation according to the invention, the installation is provided with a milk measuring device for measuring the value of a milk related parameter, the memory containing as a first admission criterion a threshold value for the milk related parameter. Each milking robot is preferably provided with a milk measuring device. The milk related milk parameter is in particular a parameter chosen from the group consisting of amount of fat, amount of protein, cell count, hormone contents, conductivity, colour, and temperature. This makes it possible, for example, to milk animals producing milk with a cell count above a particular threshold value in one of the further milking robots, while the other animals are milked in the first milking robot. As a result, the first milking robot supplies milk of high quality.

In a preferred embodiment of an installation according to the invention, the installation is provided with an animal measuring device for measuring the value of a physical property of an animal. Each milking robot is preferably provided with an animal measuring device. Alternatively or additionally, the selection unit is provided with an animal measuring device. The physical property of an animal is in particular a property chosen from the group consisting of weight, size, condition score, activity, iris scan, mouth odour, body odour, temperature, blood composition, degree of humidity of the body, degree to which the udder is filled, and teat position. This makes it possible, for example, to milk animals with a particular teat position in the milking robot that is in particular designed for this purpose, so that the milking can be performed efficiently.

The invention also relates to a method of milking animals, such as cows, by means of an installation comprising a first milking robot and at least one further milking robot, each milking robot comprising a robot arm for automatically connecting a teat cup to a teat, the method comprising the steps of identifying an animal, selectively admitting an identified animal to the first milking robot or to a further milking robot, characterized in that the method further comprises the step of determining whether an identified animal satisfies a first admission criterion and admitting an identified animal that only satisfies the first admission criterion only to the first milking robot, and admitting an identified animal that does not satisfy the first admission criterion only to a further milking robot.

The invention will be explained hereinafter in further detail with reference to exemplary embodiments shown in the drawing, in which:

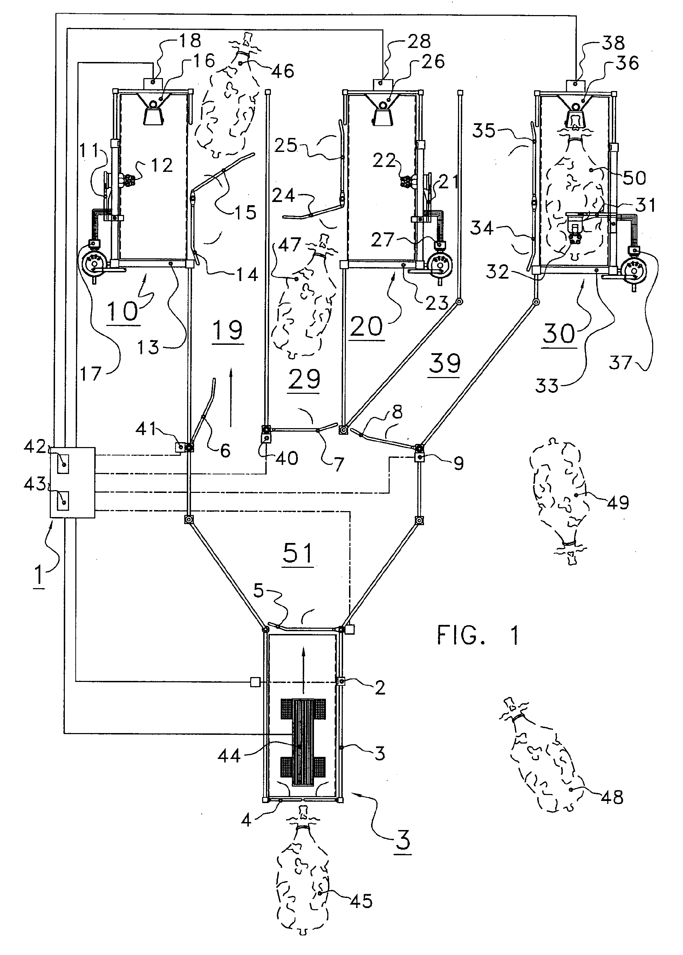

Figure 1 is a schematic plan view of an installation for milking animals, such as cows, according to the invention.

Figure 1 shows schematically an installation for milking animals, such as cows. In the example shown, the installation comprises a first milking robot 10, and as further milking robots a second milking robot 20 and a third milking robot 30. It will be obvious that the invention is applicable to any other number of further milking robots.

Each milking robot 10, 20, 30 has a robot arm 11, 21, 31 for automatically connecting at least one teat cup 12, 22, 32 to a teat of an animal. Each milking robot 10, 20, 30 further comprises a milk box 13, 23, 33 to which it is possible to get access via entrance gates 14, 24, 34. An animal is able to leave the milk box 13, 23, 33 via an exit gate 15, 25, 35. In the example shown, each milking robot 10, 20, 30 has an automatic feeding system 16, 26, 36 by means of which it is possible to supply feed, for example concentrate, to an animal present in the milking robot 10, 20, 30. It will be obvious that it is not necessary for each milking robot to comprise a feeding system. Each milking robot 10, 20, 30 is accessible for an animal via an associated path 19, 29, 39.

Each milking robot 10, 20, 30 further comprises a milk measuring device 17, 27, 37 for measuring the value of a milk related parameter. The milk related milk parameter is in particular a parameter chosen from the group consisting of amount of fat, amount of protein, cell count, hormone contents, conductivity, colour, and temperature. Other milk related parameters, such as amount of milk, dead milking time and the like, can also be applied within the invention. In case cows are concerned, the parameter can be measured per quarter. It will be obvious that a milk measuring device can also be disposed outside a milking robot.

The functioning of a milking robot 10, 20, 30 with the associated components is controlled by a control unit, in particular a computer 18, 28, 38. The computer may be a central computer or a computer per milking robot. As shown in Figure 1, the control unit is constituted by the computers 18, 28, 38 and the central control unit 1 connected therewith.

The control unit, in particular the central control unit 1, is provided with a memory 42 containing at least a first admission criterion for admitting an animal to a milking robot. For this purpose, the installation also comprises a selection unit, in the exemplary embodiment shown constituted by an animal identification system 2 for identifying an animal, the entrance gates 14, 24, 34 of the milking robots 10, 20, 30 and a pre-selection box 3 in which the animal identification system 2 is disposed. The pre-selection box 3 is accessible for an animal via an entrance gate 4. After the animal has been identified, the exit gate 5 of the pre-selection box 3 is opened, after which the animal reaches an intermediate area 51. Via one of the selection gates 6, 7, 8 an animal can reach a respective milking robot. When an animal has to be milked, the respective entrance gate of the milking robot is opened. The opening of the gates is controlled by the central control unit 1, which controls in particular the functioning of the opening units 9, 40 and 41 of the respective selection gates 8, 7, 6.

An animal identification signal is sent by the animal identification system 2 to the central control unit 1. The central control unit 1 comprises a determining device 43 for determining whether an animal identified by the animal identification system 2 satisfies the first admission criterion. The determining device 43 supplies a positive admission signal to the relevant components of the selection unit when the animal satisfies the admission criterion, and a negative admission signal when the animal does not satisfy the admission criterion. According to the invention, the control unit controls, with the aid of the positive admission signal, the selection unit in such a way that the animal can only be admitted to one of the milking robots, and controls, with the aid of the negative admission signal, the selection unit in such a way that the animal can only be admitted to one of the other milking robots.

The invention will be explained in further detail with reference to an installation for milking cows 45 to 50, two admission criteria being used. The first admission criterion is constituted by the weight of a cow 45 to 50, which weight is measured by a weighing scale 44 which is disposed in the pre-selection box 3. The second admission criterion is the cell count of the milk produced by a cow 45 to 50, which is determined in the relevant milking robot. In the example shown here, the threshold weight is 600 kg and the threshold cell count is 100,000. It will be obvious that any other threshold value can be chosen within the scope of the invention.

In this example, there is made use of the three milking robots 10, 20 and 30. The third milking robot 30 is only intended for milking cows with a cell count (measured at the previous milking run) greater than or equal to 100,000. The milk obtained by means of said third milking robot 30 can be discharged to a separate milk tank. Said third milking robot 30 may also be provided with special teat and/or udder treating devices and may be provided, if desired, with a device for medicine administration. The second milking robot 20 is only intended for milking cows with a weight smaller than or equal to 600 kg. In said second milking robot 20, there may be disposed, for example, a special feeding system 26 by means of which more and/or more energy-rich feed is supplied to the cow. The first milking robot 10 is only intended for milking cows heavier than 600 kg and with a cell count smaller than 100,000.

The embodiment of an installation according to the invention shown in the drawing operates as follows. When a cow 45 reports at the pre-selection box 3, the entrance gate 4 is opened. In the pre-selection box 3 the identity of the cow 45 is determined and her weight is measured simultaneously. The identity of the cow 45, together with her weight, is sent to the central control unit 1. The cell count of the cow 45 measured during the previous milking run in one of the milking robots 10, 20, 30 is also stored in the memory 42 of the central control unit 1. In the embodiment shown, for controlling the selection unit, priority is given to the value of the cell count. The determining device 43 determines whether the measured value of the cell count is greater than or equal to the threshold as stored in the memory 42.

When the measured value of the cell count of the milk from the cow 45 is equal to or greater than the threshold value, the central control unit opens the exit gate 5 and the selection gate 6 and closes the selection gates 7 and 8. When the cow 45 is eligible to be milked, which is to be determined on the basis of criteria known per se, the entrance gate 34 to the third milking robot 30 is also opened, after which the cow 45 is milked. During milking the value of the cell count is measured and these data are sent to the central control unit, so that it will be possible to take this new value of the cell count into account at the next time the cow 45 reports at the pre-selection box 3.

In case the determining device 43 has determined that the measured value of the cell count of the milk from the cow 45 is smaller than the threshold value, the measured weight is compared with the threshold value for the weight. When the cow 45 is lighter than 600 kg, the selection gates are operated in such a way that the cow 45 will get access to the second milking robot 20, in the alternative case the cow 45 will get access to the first milking robot 10.

Although, in the embodiment shown, the milking robots are represented in an arrangement in which they are juxtaposed, it will be obvious that the invention is also applicable when the milking robots are arranged lengthways. It is also possible for the weighing scale 44 to be disposed, instead of in the pre-selection box 3, in each of the milk boxes 13, 23, 33.

Of course, it is possible for the central control unit 1 to control the selection unit on the basis of other admission criteria. It is possible, for example, for a farmer to input animal identities as a first admission criterion by means of an input device, such as a keyboard. The farmer may input, for example, that cows 45 and 50 only get access to the third milking robot 30, that cows 46 and 48 only get access to the first milking robot 10, and that cows 47 and 49 only get access to the second milking robot 20.

Admission criteria that differ from those as described above in the exemplary embodiment and on the basis of which a cow that satisfies these criteria only gets access to one of the milking robots, are also applicable within the invention. In this context there may be taken into consideration in particular a criterion such as lactation stage, teat size and/or teat shape, medicine administration, measurements of the animal, weight, size, condition score, activity, iris scan, mouth odour, body odour, temperature, blood composition, degree of humidity of the body, degree to which the udder is filled, and teat position.

In this manner each milking robot can be adapted specifically for only milking cows that satisfy one or more criteria. It is possible, for example, to design a milking robot especially for obtaining milk that is supplied (preferably automatically) to a calf of the milked cow. Additionally, it would be possible to design a milking robot especially for taking and measuring milk samples and/or for measuring physical properties of a cow.

It will be obvious that, in an embodiment of the invention, the selection unit is suitable for admitting the animal, by means of admission signals obtained with the aid of one or more admission criteria, only to one of the further milking robots.

## Claims

1. An installation for milking animals, such as cows, which installation comprises:
a first milking robot (10) and at least one further milking robot (20, 30), each milking robot (10, 20, 30) comprising a robot arm (11, 21, 31) for automatically connecting a teat cup (12, 22, 32) to a teat,
a selection unit for admitting an animal to the first milking robot (10) or to a further milking robot (20, 30), the selection unit being provided with an animal identification system (2) for identifying an animal, and with a control unit (1) for controlling the selection unit with the aid of data from the animal identification system (2), **characterized in that** the control unit (1) is further provided with:
a memory (42) containing at least a first admission criterion,
a determining device (43) for determining whether an animal identified by the animal identification system (2) satisfies the first admission criterion and for supplying a positive admission signal when the animal satisfies the admission criterion and a negative admission signal when the animal does not satisfy the admission criterion,
the control unit (1) controlling, only with the aid of the positive admission signal, the selection unit in such a way that the animal can only be admitted to the first milking robot (10), and controlling, only with the aid of the negative admission signal, the selection unit in such a way that the animal can be admitted to a further milking robot (20, 30).

2. An installation as claimed in claim 1, **characterized in that** the memory (42) contains animal identities as a first admission criterion.

3. An installation as claimed in claim 2, **characterized in that** the memory (42) contains as a first admission criterion a criterion belonging to the group consisting of animal species, lactation stage, teat size and/or teat shape, medicine administration, measurements of the animal, pregnancy or non-pregnancy of the animal, and the time elapsed since the last time the animal was admitted.

4. An installation as claimed in claim 1, **characterized in that** the installation is provided with a milk measuring device (17, 27, 37) for measuring the value of a milk related parameter, the memory (42) comprising as a first admission criterion a threshold value for the milk related parameter.

5. An installation as claimed in claim 4, **characterized in that** each milking robot (10, 20, 30) is provided with a milk measuring device (17, 27, 37).

6. An installation as claimed in claim 4 or 5, **characterized in that** the milk related milk parameter is a parameter chosen from the group consisting of amount of fat, amount of protein, cell count, hormone contents, conductivity, colour, and temperature.

7. An installation as claimed in claim 1, **characterized in that** the installation is provided with an animal measuring device for measuring the value of a physical property of an animal.

8. An installation as claimed in claim 7, **characterized in that** each milking robot (10, 20, 30) is provided with an animal measuring device.

9. An installation as claimed in claim 7 or 8, **characterized in that** the selection unit is provided with an animal measuring device.

10. An installation as claimed in claim 7, 8 or 9, **characterized in that** the physical property of an animal is a property chosen from the group consisting of weight, size, condition score, activity, iris scan, mouth odour, body odour, temperature, blood composition, degree of humidity of the body, degree to which the udder is filled, and teat position.

11. A method of milking animals, such as cows, by means of an installation comprising a first milking robot (10) and at least one further milking robot (20, 30), each milking robot (10, 20, 30) comprising a robot arm (11, 21, 31) for automatically connecting a teat cup (12, 22, 32) to a teat, the method comprising the steps of identifying an animal, selectively admitting an identified animal to the first milking robot (10) or to a further milking robot (20, 30), **characterized in that** the method further comprises the step of determining whether an identified animal satisfies a first admission criterion and admitting an identified animal that satisfies the first admission criterion only to the first milking robot (10), and admitting an identified animal that does not satisfy the first admission criterion only to a further milking robot (20, 30).

12. A method as claimed in claim 11, **characterized in that** as a first admission criterion animal identities are inputted into the memory (42).

13. A method as claimed in claim 12, **characterized in that** as a first admission criterion is inputted into the memory (42) a criterion belonging to the group consisting of animal species, lactation stage, teat size and/or teat shape, medicine administration, and measurements of the animal.

14. A method as claimed in any one of claims 11 to 13, **characterized in that** the method comprises the step of measuring the value of a milk related parameter by means of a milk measuring device (17, 27, 37), a threshold value for the milk related parameter being inputted into the memory (42) as a first admission criterion.

15. A method as claimed in claim 14, **characterized in that** each milking robot (10, 20, 30) is provided with a milk measuring device (17, 27, 37).

16. A method as claimed in claim 14 or 15, **characterized in that** for the milk related milk parameter is chosen a parameter from the group consisting of amount of fat, amount of protein, cell count, hormone contents, conductivity, colour, and temperature.

17. A method as claimed in any one of claims 11 to 16, **characterized in that** the method comprises the step of measuring the value of a physical property of an animal by means of an animal measuring device.

18. A method as claimed in claim 17, **characterized in that** each milking robot (10, 20, 30) is provided with an animal measuring device.

19. A method as claimed in claim 17 or 18, **characterized in that** the selective admission of an identified animal to the first milking robot (10) or to a further milking robot (20, 30) is performed with the aid of data from the animal measuring device.

20. A method as claimed in claim 17, 18 or 19, **characterized in that** as a physical property of an animal is chosen a property from the group consisting of weight, size, condition score, activity, iris scan, mouth odour, body odour, temperature, blood composition, degree of humidity of the body, degree to which the udder is filled, and teat position.
